# EUROPÄISCHE PATENTANMELDUNG

(11) **EP 4 102 661 A1**
(43) Veröffentlichungstag der Anmeldung: **14.12.2022**
(21) Anmeldenummer: 22167756.0
(22) Anmeldetag: 12.04.2022
(51) Int. Cl.: H02G 3/08, H02G 3/18, H02G 3/14, H02G 3/38

(54) **INSTALLATIONSDOSE MIT EINER INSTALLATIONSÖFFNUNG ZUM EINFÜHREN EINES LEERROHRES ODER KABELS**

(30) Priorität: 20.04.2021 DE 202021102109 U
(71) Anmelder: OBO Bettermann Hungary Kft., 2347 Bugyi (HU)
(72) Erfinder: Borza, Sándor György, 2371 Dabas-Sári (HU)
(74) Vertreter: Haverkamp Patentanwälte PartG mbB

(57) **Zusammenfassung**

Beschrieben ist eine Installationsdose 1 mit zumindest einer Installationsöffnung 7, 7.1, 7.2, 7.3 zum Einführen eines Leerrohres oder Kabels, wobei die Installationsöffnung 7, 7.1, 7.2, 7.3 im Auslieferungszustand durch mehrere, ineinander angeordnete Verschlusssegmente 8, 9, 10 verschlossen ist, wobei zumindest zwei Verschlusssegmente 8, 9, 10 an ihrem jeweiligen äußeren Partner 9, 10, 4 mittels zwei, jeweils eine Schwenkachse 14, 15, 16 bildenden Anbindungsstegen 11, 11a, 12, 12a, 13, 13a angeschlossen sind und die durch die Anbindungsstege 11, 11a, 12, 12a, 13, 13a gebildeten Schwenkachsen 14, 15, 16 zwischen verschiedenen Partnern in Umfangsrichtung der Installationsöffnung 7, 7.1, 7.2, 7.3 winklig zueinander angeordnet sind, wobei zwischen jedem Verschlusssegment 8, 9, 10 und seinem jeweils äußeren Partner 9, 10, 4 eine umlaufende, von den Anbindungsstegen 11, 11a, 12, 12a, 13, 13a unterbrochene Aussparung 17, 18, 19 vorgesehen ist und wobei die Anbindungsstege 11, 11a, 12, 12a, 13, 13a gegenüber einer Torsionsbewegung duktil ausgelegt sind, damit jedes Verschlusssegment 8, 9, 10 gegenüber seinem äußeren Partner 9, 10, 4 um die Anbindungsstege 11, 11a, 12, 12a, 13, 13a verschwenkbar und zum Öffnen einer Installationsöffnung 7, 7.1, 7.2, 7.3 die Anbindungsstege 11, 11a, 12, 12a, 13, 13a eines Verschlusssegments 8, 9, 10 in Folge einer eine Torsion auf die Anbindungsstege 11, 11a, 12, 12a, 13, 13a ausübenden Schwenkbewegung 21, 21a durchtrennbar sind.

## Beschreibung

Die Erfindung betrifft eine Installationsdose, insbesondere eine Unterflurdose mit einer als Ausbrechöffnung konzipierten Installationsöffnung zum Einführen eines Leerrohres oder Kabels.

Installationsdosen werden genutzt, um elektrische und/oder elektronische Komponenten etwa in einem Gebäude in oder auf dem Boden, der Decke oder einer Wand, zu installieren. Hierfür weist die Installationsdose einen nach außen im Wesentlichen abgeschirmten Installationsraum auf, in dem die Komponenten untergebracht werden. Zum Einführen von Kabeln oder Leerrohren in den Installationsraum einer Installationsdose ist diese mit zumindest einer Installationsöffnung ausgestattet, die einen zu einem über diese einzuführenden Kabel bzw. Leerrohr passenden Sollinnenquerschnitt aufweist.

Eine Unterflurdose, auf die sich die Erfindung beziehen kann, ist eine spezielle Installationsdose. Eine solche wird auf einem Bodensockel befestigt. Im Bodenbereich werden Kabel und/oder Leerrohre durch vorgesehene Installationsöffnungen in das Innere der Installationsdose geführt. Anschließend wird auf den Bodensockel Estrich aufgebracht, in den die Kabel und/oder Leerrohre eingebettet sind und der die Unterflurdose umschließt. Der obere Abschluss einer solchen Unterflurdose schließt typischerweise mit der Oberkante des Estrichs ab. Die Installationsdose ist dann im Unterflur angeordnet. Solche Unterflurdosen können auch als versenkbare Bodendosen ausgebildet sein. Eine Unterflurinstallationsdose ist aus US 2009/0142947 A1 bekannt.

Um zu verhindern, dass Fremdkörper, beispielsweise Estrich, in den Installationsraum gelangen, sind die Installationsöffnungen im Auslieferungszustand mit Verschlussteilen verschlossen. Diese werden bedarfsweise herausgebrochen, weshalb derartige Installationsöffnungen auch als Ausbrechöffnungen angesprochen werden. Um ein Langgut, wie ein Kabel oder ein Leerrohr, in eine solche Installationsöffnung einzuführen, muss ein Verschlussteil als Ausbrechbutzen aus der Installationsöffnung herausgebrochen werden. Nicht herausgebrochene Verschlussteile trennen weiterhin die Umgebung von dem Installationsraum.

Bekannt ist eine Unterflurdose, bei der das Verschlussteil durch zwei ineinander angeordnete Verschlusssegmente - ein inneres Verschlusssegment und ein dies äußerlich einfassendes Verschlusssegment - gebildet ist. Das äußere Verschlusssegment wird als ringförmiger Stanzbutzen durch Stanzen in Installationsöffnungsrichtung in den Installationsraum versetzt, befindet sich mithin in einer Ebene, die versetzt zur Ebene des außenliegenden Materials der Installationsdose und auch bezüglich des inneren Verschlusssegmentes ist. Das innere Verschlusssegment ist an seinem äußeren Partner - dem äußeren, versetzt dazu angeordneten Verschlusssegment - mit einander diametral gegenüberliegenden Anbindungsstegen angeschlossen; das äußere Verschlusssegment ist in gleicher Weise an seinen äußeren Partner - dem Grundkörper der Installationsdose - mit zwei gegenüberliegenden Anbindungsstegen angeschlossen. Die beiden jeweils einander gegenüberliegenden Anbindungsstege bilden jeweils eine Achse. Die beiden Achsen einer solchen Installationsöffnung sind um 90° in Umfangsrichtung der Installationsöffnung zueinander versetzt angeordnet. Den jeweiligen Achsen folgend, sind in das innere Verschlusssegment Schlitze eingebracht, in die eine Klinge eines Schraubendrehers als Hebel zum Herausbrechen eines Verschlusssegmentes eingesetzt werden kann.

Zum Bereitstellen einer Installationsöffnung, die dem Innenquerschnitt des äußeren Partners des äußeren Verschlusssegmentes entspricht, wird wahlweise das innere Verschlusssegment oder das äußere Verschlusssegment zusammen mit dem daran angebundenen inneren Verschlusssegment herausgebrochen, und zwar je nachdem, ob ein im Durchmesser größeres oder kleineres Langgut durch die Installationsöffnung eingeführt werden soll. Soll das äußere Verschlusssegment zum Einführen eines Langgutes mit größerem Durchmesser entfernt werden, wird hierfür die Klinge eines Schraubendrehers in den Schlitz des inneren Verschlusssegmentes, der auf der durch die dem äußeren Verschlusssegment zugehörigen Anbindungsstege gebildeten Achse liegt, eingebracht und um diese Achse verschwenkt. Diese Schwenkbewegung wird über die Anbindungsstege zwischen innerem und äußerem Verschlusssegment auf letzteres übertragen, sodass auf die Anbindungsstege zwischen äußerem Verschlusssegment und seinem äußeren Partner eine Torsionskraft wirkt. Die Anbindungsstege sind durch ihre geometrische Ausgestaltung (relativ breit gegenüber ihrer Dicke) sowie durch den Herstellungsprozess des Verschlussteils (Umformen durch Tiefziehen/Stanzen) dazu ausgelegt, gegenüber einer solchen Torsionsbeanspruchung unmittelbar zu brechen. Ist das äußere Verschlusssegment herausgebrochen, ist eine Installationsöffnung bereitgestellt. Mit dem Herausbrechen des äußeren Verschlusssegmentes ist zugleich das von diesem gehaltene innere Verschlusssegment entfernt. Der Querschnitt der Installationsöffnung wird durch den Innenquerschnitt des äußeren Partners des äußeren Verschlusssegmentes gebildet.

Soll ein kleinerer Installationsöffnungsquerschnitt bereitgestellt werden, kann das innere Verschlusssegment herausgebrochen werden. Hierzu wird die Klinge des Schraubendrehers in den an dem inneren Verschlusssegment bereitgestellten Schlitz eingebracht, der mit der Achse der Anbindungsstege fluchtet, die das innere Verschlusssegment mit seinem äußeren Partner verbinden. Zum Herausbrechen des inneren Verschlusssegments wird das innere Verschlusssegment um diese Achse verschwenkt, sodass dieses, wie dieses bereits vorstehend zu dem äußeren Verschlusssegment beschrieben ist, herausgebrochen wird. Dann ist eine Installationsöffnung mit einem Innenquerschnitt bereitgestellt, die durch den Innenquerschnitt des äußeren Verschlusssegmentes gebildet wird.

Nachteilig bei diesem Stand der Technik ist, dass zum Herausbrechen der Verschlusssegmente eine nicht unbeträchtliche Kraft aufgewandt werden muss, sodass die Gefahr besteht, dass die Installationsdose verformt wird und Schaden nimmt. Zudem muss sich der Installateur sehr genau im Klaren darüber sein, in welche Richtung er das innere Verschlusssegment verschwenkt um das gewünschte Ergebnis zu erhalten und er nicht versehentlich das falsche Verschlusssegment heraustrennt. Ein einmal herausgebrochenes Verschlusssegment kann nicht wieder eingesetzt werden.

Bei einer anderen vorbekannten Unterflurkassette als Installationsdose ist vorgesehen, Installationsöffnungen in einer Platine bereitzustellen, die mit gegenüber dem jeweiligen äußeren Partner vorperforierten Verschlusssegmenten verschlossen sind. Durch die Perforierung verfügt jedes Verschlusssegment über mehrere Anbindungsstege, wobei jedenfalls die weiter außen liegenden Verschlusssegmente zum Bereitstellen der erforderlichen Stabilität über drei oder mehr Anbindungsstege verfügen. Zum Bereitstellen einer Installationsöffnung ist vorgesehen, die Perforierung mit einer Trennzange oder mit einem Meißel zu durchtrennen. Das vollständige Abtrennen der Anbindungsstege mit einer Trennzange ist notwendig, damit diese nicht in den gewollten Installationsöffnungsquerschnitt hineinragen.

Nachteilig bei diesem Stand der Technik ist nicht nur, dass das Trennen der Vielzahl der Anbindungsstege mittels einer Trennzange mitunter zeitaufwendig sein kann, sondern auch, dass kaum Raum vorhanden ist, eine Trennzange so zu positionieren, damit die Anbindungsstege durchtrennt werden können, wenn die Installationsdose bereits auf dem Boden, in einer Wand oder einer Decke installiert ist. Dann verbleibt nur noch die Möglichkeit, die Anbindungsstege mit einem Meißel aufzuschlagen, was die Gefahr einer Verformung der Installationsdose mit sich bringt.

Vorbekannte Installationsdosen, bei denen ein Verschlusssegment über zwei oder mehr Anbindungsstege mit der das Verschlusssegment tragenden Wand verbunden ist, sind aus CH 317 572 A2, DE 10 2005 018 812 A1 und DE 10 2018 110 444 B3 bekannt. Diese vorbekannten Installationsdosen verfügen jedoch nicht über Ausbrechöffnungen, die mehrere Verschlusssegmente aufweisen, um in Anpassung an ein beispielsweise einzuführendes Rohr dasjenige Verschlusselement herauszutrennen, welches dem Rohrdurchmesser entspricht.

Vor diesem Hintergrund stellt sich die Erfindung die Aufgabe, eine Installationsdose bereitzustellen, die eine verbesserte, als Ausbrechöffnung konzipierte Installationsöffnung aufweist, damit die vorstehend beschriebenen Nachteile überwunden werden.

Gelöst wird diese Aufgabe durch eine Installationsdose mit den Merkmalen der Ansprüche 1, 3 und 11. Vorteilhafte Ausgestaltungen finden sich in den abhängigen Ansprüchen sowie der Beschreibung.

Kern dieser Installationsdosen ist es, das Verschlussteil dergestalt auszubilden, dass das oder die Verschlusssegmente gegenüber ihrem jeweiligen äußeren Partner um die durch die jeweiligen Anbindungsstege gebildete Achse zunächst, ohne zu brechen, verschwenkt werden können, bevor die Anbindungsstege durch die Torsionsbeanspruchung infolge einer weitergehenden Schwenkbewegung brechen. Auf diese Weise kann ein Installateur zunächst intuitiv das oder die Verschlusssegmente um eine beliebige, durch ein Anbindungsstegpaar gebildete Achse verschwenken, um zu prüfen, ob das hierdurch bewegte Verschlusssegment das gewünschte ist. Ist das durch die Schwenkbewegung bewegte Verschlusssegment nicht das eigentlich gewünschte, kann die Schwenkbewegung wieder rückgängig gemacht und damit das Verschlussteil im Wesentlichen in seinen Ursprungszustand zurückversetzt werden. Anschließend wird das Installationssegment um eine andere, typischerweise dann diejenige Achse verschwenkt, mit der das herauszubrechende Verschlusssegment bewegt und herausgebrochen wird.

Zum Verschwenken der Verschlusssegmente gegenüber dem jeweils außenliegenden Partner ist vorgesehen, zwischen dem Verschlusssegment und dem äußeren Partner eine umlaufende Aussparung vorzusehen, die nur durch die zwei Anbindungsstege unterbrochen wird. Diese Aussparung bewirkt mit ihrer lichten Weite zwischen einem Verschlusssegment und seinem äußeren Partner, dass das Verschlusssegment gegenüber dem jeweilig äußeren Partner um die Anbindungsstege frei verschwenkbar ist, und zwar ohne dass einer der beiden Partner gegenüber dem anderen Partner versetzt sein müsste. Eine solche Aussparung braucht nicht sonderlich weit zu sein; die Mindestweite wird bestimmt durch den Durchmesser sowie die Materialdicke des jeweiligen Verschlusssegmentes. Typischerweise ist die Aussparung weniger weit als 7 mm.

Damit ein Verschlusssegment um seine Anbindungsstege verschwenkbar ist, sind diese gegenüber einer Torsionsbewegung mit einer gewissen Duktilität ausgestaltet. Das bedeutet, dass die Anbindungsstege bei einer Torsionsbewegung zunächst plastisch verformbar sind und im Unterschied zu vorbekannten Installationsdosen in Folge ihrer umformbedingten Versprödung (Kaltverfestigung) nicht sofort brechen, sondern zunächst eine gewisse plastische Verformung durch Dehnung (Verdrilling) in Folge einer Schwenkbewegung erlauben. Wird ein kritischer Schwenkbetrag oder ein mehrfaches Schwenken überschritten, brechen die Anbindungsstege. Die Stege weisen nach dem Bruch in ihrem der Bruchfläche benachbarten Abschnitt eine typische Verjüngung zur Bruchfläche hin auf, was durch die Duktilität des Materials bedingt ist. Auf diese Weise kann ein Verschlussteil vorgesehen sein, bei dem die Verschlusssegmente gegeneinander durchaus zwei oder drei Mal verschwenkt werden können, bevor die Anbindungsstege tatsächlich durchtrennt werden.

Die Anbindungsstege können durch ihre Materialeigenschaft und/oder durch ihre Geometrie, insbesondere ihre Querschnittsgeometrie, die gewünschten duktilen Eigenschaften aufweisen.

Für eine geometrische Duktilität kann vorgesehen sein, dass die Anbindungsstege ein Dicken-Breiten-Verhältnis zwischen 0,5 - 2 aufweisen. Bevorzugt ist ein Dicken-Breiten-Verhältnis von etwa 1. Die Dicke eines solchen Anbindungssteges entspricht der Materialdicke; die Breite ist quer zur Längserstreckung des Anbindungssteges anzusehen. Hierdurch werden Anbindungsstege bereitgestellt, bei denen der durch die Schwenkbewegung tordierte Querschnitt möglichst die Form eines runden Stabes aufweist. Eine solche Querschnittsform ist für eine Duktilität gegenüber einer Torsionsbeanspruchung sinnvoll. Es hat sich gezeigt, dass ein Dicken-Breiten-Verhältnis von 0,5 - 2 noch hinreichend gute Ergebnisse betreffend des erforderlichen kritischen Schwenkwinkels liefert, gleichzeitig jedoch auch die erforderliche Festigkeit gewährleistet und gut herzustellen ist.

Die Anbindungsstege können auch so ausgelegt sein, dass ein Verschwenken mit dem bloßen Finger möglich ist. Auf diese Weise können auch an schwer zugänglichen Stellen im Nachhinein Installationsöffnungen durch Heraustrennen von Verschlusssegmenten bereitgestellt werden. Auch ist das Öffnen der Installationsöffnung wesentlich einfacher und schneller durchzuführen, als es im Stand der Technik der Fall ist.

In einer Weiterbildung ist vorgesehen, dass der Übergang zwischen Anbindungssteg und Verschlusssegment bzw. dem jeweiligen äußeren Partner mit einem Radius ausgeführt ist. Hierdurch wird im Übergang zwischen Anbindungssteg und Verschlusssegment die Kerbwirkung verringert, um zu vermeiden, dass ein unkontrolliertes Aufreißen ohne plastische Deformation beim Verschwenken erfolgt. Besonders sinnvoll ist es daher, den Radius in der Verschlussebene vorzusehen. Zudem erhöht sich die Stabilität der Verschlusssegmente zueinander, was sich auch im Herstellprozess positiv auswirkt.

Für ein definiertes Durchtrennen der Anbindungsstege kann vorgesehen sein, diese mit einer Sollbruchstelle zu versehen. Dies ist sinnvoll, wenn die zu schaffende Installationsöffnung eine bestimmte Sollinnenquerschnittsgeometrie aufweisen soll und an dem äußeren Partner keine Anbindungsstegreste in radialer Richtung nach innen über die vorgesehene Sollinnenquerschnittsgeometrie ragen dürfen. Andererseits kann auch vorgesehen sein, die Stegreste mit einer bestimmten Länge in den Installationsöffnungsquerschnitt hineinragen zu lassen, um diese als Widerhaken zu nutzen, beispielsweise wenn ein Wellrohr in die Installationsöffnung eingeführt wird. Diese können dann in ein Tal des Wellrohres eingreifen und somit eine Zugentlastung herbeiführen.

Die Anbindungsstege bilden eine Schwenkachse, um die das jeweils innere Verschlusssegment bezüglich seines äußeren Partners verschwenkbar ist. Hierfür sind die Anbindungsstege an gegenüberliegenden Seiten des jeweiligen Verschlusssegmentes angeordnet, bevorzugt diametral einander gegenüberliegend. Dann geht die Schwenkachse durch den Mittelpunkt des Verschlusssegmentes. Damit das Verschlusssegment gegenüber seinem äußeren Partner verschwenkbar ist, ist vorgesehen, dass eine Verbindung zwischen Verschlusssegment und äußerem Partner nur über die zwei angesprochenen Stege vorgesehen ist bzw. etwaige zusätzliche Anbindungen einem Verschwenken nicht hinderlich sind.

Wie bereits vorstehend aufgezeigt, kann vorgesehen sein, dass das Verschlussteil durch mehrere Verschlusssegmente gebildet wird. Die Verschlusssegmente sind dann jeweils ineinander angeordnet. Das bedeutet, dass durch Herausbrechen des jeweils innenliegenden Verschlusssegments eine Installationsöffnung mit einem kleineren Querschnitt, also mit einem kleineren Durchmesser, bereitgestellt wird. Wird ein größerer Installationsöffnungsquerschnitt benötigt, wird ein weiter außen liegendes Verschlusssegment herausgebrochen. Da durch die Anbindungsstege ein weiter innen liegendes Verschlusssegment an das bzw. die äußeren Verschlusssegmente angeschlossen ist, wird mit dem Herausbrechen eines äußeren Verschlusssegmentes ebenfalls das von diesem eingefasste zumindest eine weitere, innenliegende Verschlusssegment herausgetrennt. Möglich ist, dass ein inneres Verschlusssegment an zwei verschiedenen äußeren Verschlusssegmenten angeschlossen ist; diese sind dann im Rahmen dieser Ausführungen gemeinsam als "äußerer Partner" anzusehen. Hierdurch können eine Vielzahl von unterschiedlichen Installationsöffnungsquerschnitten bereitgestellt werden, die je nach Gebrauch herausgebrochen werden können.

Bevorzugt ist vorgesehen, dass die mehreren Verschlusssegmente im Wesentlichen in einer gemeinsamen Verschlussebene angeordnet sind. Hierdurch wird eine insgesamt ebene Innen- bzw. Außenseite des Installationsteils bereitgestellt. Zudem können auf diese Weise die Anbindungsstege auf diese Weise besonders einfach duktil ausgestaltet werden, da sie nicht durch einen herstellungsseitigen Umformprozess kaltverfestigt werden.

Eine Installationsöffnung kann beispielsweise drei oder auch mehr Installationssegmente aufweisen, damit diese Installationsöffnung für eine entsprechende Anzahl im Durchmesser unterschiedlicher Langgüter genutzt werden kann.

Die vorstehend angesprochenen Anbindungsstege sind, sollten mehrere Verschlusssegmente vorgesehen sein, an den jeweiligen Verschlusssegmenten so angeordnet, dass die durch die Anbindungsstege gebildeten Schwenkachsen in der Ebene der Installationsöffnung winklig zueinander angeordnet sind. Soll nicht das innerste Verschlusssegment herausgebrochen werden, kann durch die winklige Anordnung der Schwenkachsen zueinander dennoch das innerste Verschlusssegment um diejenige Achse verschwenkt werden, die durch diejenigen Anbindungsstege gebildet wird, die durchtrennt werden sollen: Durch die winklige Anordnung der Achsen zueinander wird die Schwenkkraft ausgehend von dem innersten Verschlusssegment an die zu durchtrennenden Anbindungsstege weitergeleitet, ohne dass die nicht zu durchtrennenden Anbindungsstege Schaden nehmen.

Bevorzugt ist vorgesehen, dass die Winkelabstände zwischen den Anbindungsstegen im Wesentlichen gleich sind; die Achsen sind dann gleichwinklig. Auf diese Weise ist eine optimale Kraftdurchleitung zu dem jeweiligen Verschlusssegment, welches herausgetrennt werden soll, gewährleistet, wobei die Gefahr, dass andere Anbindungsstege hierdurch mitbeschädigt werden, minimiert ist.

Bevorzugt ist vorgesehen, dass der Installationsöffnungsquerschnitt im Wesentlichen kreisrund ist. Dann ist es insbesondere vorteilhaft, wenn die Verschlusssegmente jeweils konzentrisch gegenüber ihrem äußeren Partner angeordnet sind. Auf diese Weise ist eine einfache Herstellung möglich. Denkbar ist aber auch eine exzentrische Anordnung. Wenn Langgüter mit einer anderen Querschnittsgeometrie, beispielsweise quadratisch mit gerundeten Kanten als Leerrohre verwendet werden sollen, kann eine solche Installationsöffnung bzw. der Innenquerschnitt der Verschlusssegmente selbstverständlich auch eine solche Querschnittsgeometrie aufweisen.

Für ein definiertes Verschwenken der Verschlusssegmente gegenüber ihrem äußeren Partner kann vorgesehen sein, dass das innerste Verschlusssegment eine Werkzeugaussparung und/oder eine von der Ebene des Verschlusssegments abragende Handhabe aufweist, mit der die Schwenkbewegung für einen Installateur unterstützbar ist. Insbesondere ist es sinnvoll, wenn das durch die Werkzeugaussparung eingebrachte Werkzeug bzw. die Handhabe eine Schwenkbewegung auf der durch die zu durchtrennenden Anbindungsstege gebildeten Achse liegt. Die Aussparung bzw. die Handhabe kann dann für ein definiertes Verschwenken des innersten Verschlusssegmentes zumindest eine definierte Fläche aufweisen, die parallel zu den Schwenkachsen ausgerichtet ist. Auf diese Weise ist ein besonders gefühlvolles Verschwenken möglich.

Sind mehrere Verschlusssegmente mit jeweils einer eigenen Schwenkachse vorgesehen, ist es vorteilhaft, wenn die Werkzeugaussparung bzw. die Handhabe auf dem Schnittpunkt der Schwenkachsen angeordnet ist, da dann nur eine Werkzeugaussparung und/oder Handhabe vorgesehen sein muss und dennoch ein bestmögliches Verschwenkgefühl zu ermöglichen.

In einer besonderen Ausgestaltung ist vorgesehen, dass die Werkzeugaussparung in Form von Schlitzen zum Einsetzen einer Klinge eines Schraubendrehers ausgebildet ist. Ein Schraubendreher ist bei der Installation einer Installationsdose typischerweise ohnehin zur Hand. Es bietet sich daher an, diesen zu nutzen, um die gewünschten Installationsöffnungen bereit zu stellen. Bevorzugt ist vorgesehen, dass die Längserstreckung der Schlitze auf der durch die Anbindungsstege gebildeten Schwenkachsen liegt, um das Verschwenken bestmöglich zu unterstützen. Bei mehreren Schwenkachsen wird auf diese Weise eine durch die Schlitze gebildete sternförmige Ausnehmung als Werkzeugausnehmung vorgesehen.

Weiter kann vorgesehen sein, dass benachbart zu den Anbindungsstegen die lichte Weite der Aussparung vergrößert gegenüber der sonstigen lichten Weite ist. Auf diese Weise kann der Steg in seiner Längserstreckung entsprechend lang ausgeführt werden, was sich positiv auf die geforderte Duktilität auswirkt. Zudem kann auf diese Weise Raum für das Einbringen des Kopfes einer Trennzange bereitgestellt werden, sodass sie in die Aussparung hineinführbar und der Anbindungssteg mit der Trennzange durchtrennbar ist.

In vielen Fällen ist es gewünscht, dass eine Installationsöffnung möglichst bündig mit einem einzubringenden Leerrohr oder einem Kabel abschließt. Hierfür ist ein äußerer Partner des Verschlussteils einer solchen Installationsöffnung mit seinem inneren Querschnitt an die Geometrie der äußeren Mantelfläche eines einzuführenden Langgutes angepasst. Wird das dem Partner zugehörige innenliegende Verschlusssegment herausgebrochen, verbleibt der vorgegebene Sollinnenquerschnitt, sodass das Leerrohr oder das Kabel passgenau eingesteckt werden kann.

Vorgesehen ist für diesen Fall, dass der nach innen weisende radiale Abschluss des außenliegenden Partners benachbart zu den Anbindungsstegen gegenüber dem durch die Spur der innenseitigen Mantelfläche bildenden Sollinnenquerschnitt nach außen versetzt ist, sodass eine Aussparung bereitgestellt wird. Die vorgesehene Bruchstelle des diese Aussparung überbrückenden Anbindungssteges befindet sich außerhalb der Spur der Mantelfläche des einzusetzenden Langgutes. Dieses kann entweder durch die radiale Tiefe der Aussparung und/oder durch Vorsehen einer entsprechenden Sollbruchstelle erzielt werden. Auf diese Weise wird der Sollinnenquerschnitt durch den beim Herausbrechen des Verschlusssegmentes übrigbleibenden Stegrestes nicht beeinflusst. Insbesondere ist keine Nachbearbeitung erforderlich, um diesen abzutrennen, um das Leerrohr oder das Kabel in die Installationsöffnung einzuführen. Insbesondere in diesem Kontext ist zu betonen, dass die Anbindungsstege durch diese Ausgestaltung eine größere Längserstreckung aufweisen, als die lichte Weite der Aussparung, die nicht im Bereich einer solchen in radialer Richtung die lichte Weite befindlichen Aussparungsvergrößerung ist. Durch die größere Länge wird die gewünschte duktile Eigenschaft der Anbindungsstege unterstützt.

Bevorzugt ist die Installationsdose zumindest in dem Bereich der Installationsöffnung aus einer Blechplatine gefertigt. Aus der Blechplatine können mit bekannten Mitteln die vorstehend beschriebenen Geometrien ohne technische Schwierigkeiten und sicher hergestellt werden. Zusätzlich wird die erforderliche Festigkeit sichergestellt.

In diesem Fall können die vorgegebenen Geometrien gestanzt werden. Hierdurch sind die Herstellkosten gering gehalten. Eine andere Möglichkeit ist es, die Aussparungen laserauszuschneiden. Wenngleich dies während der Produktion einen größeren Aufwand bedeutet, so ist hierdurch eine höhere Fertigungsgenauigkeit möglich. Insbesondere im Bereich der Anbindungsstege wird Laserschneiden als vorteilhaft angesehen, um die gewünschten Geometrien auszubilden. Durch den Wärmeeintrag wird das Material entfestigt, sodass es duktiler wird und ein reversibles Verschwenken unterstützt.

Auch ein kombiniertes Herstellungsverfahren ist möglich, und zwar dass ein Teil einer Aussparung endkonturgenau gestanzt und ein anderer Teil vorgestanzt und anschließend endkonturgenau lasergeschnitten wird. Bei einem solchen kombinierten Verfahren wird man letzteres zum Ausbilden der Anbindungsstege und der ggf. vorhandenen hierzu benachbarten Stegrestaussparungen verwenden. Durch ein solch hybrides Herstellungsverfahren werden die vorstehend genannten mechanischen Vorteile erreicht bei geringen Produktionskosten.

In einer anderen Ausgestaltung ist vorgesehen, dass die Installationsdose in dem Bereich der Installationsöffnung aus Kunststoff gefertigt ist. Dann kann das Verschlussteil in einem Spritzgussverfahren hergestellt werden. Zum Ausbilden der filigranen Anbindungsstege kann vorgesehen sein, einen 2K-Spritzprozess durchzuführen.

Die Erfindung wird nachstehend anhand der beiliegenden Figuren erläutert. Es zeigen:
- **Fig. 1**:: Eine Installationsdose mit mehreren als Ausbrechöffnungen aus-geführten Installationsöffnungen,
- **Fig. 2:**: eine Detailansicht des Verschlussteils einer Installationsöffnung in einer perspektivischen Ansicht,
- **Fig. 3:**: das Verschlussteil nach Figur 2 in einer Draufsicht,
- **Fig. 4:**: eine vergrößerte Darstellung eines Ausschnittes der Figur 3 im Bereich eines Anbindungssteges und
- **Fig. 5:**: das Verschlussteil der Figur 3 nach Erstellen einer Installationsöff-nung.

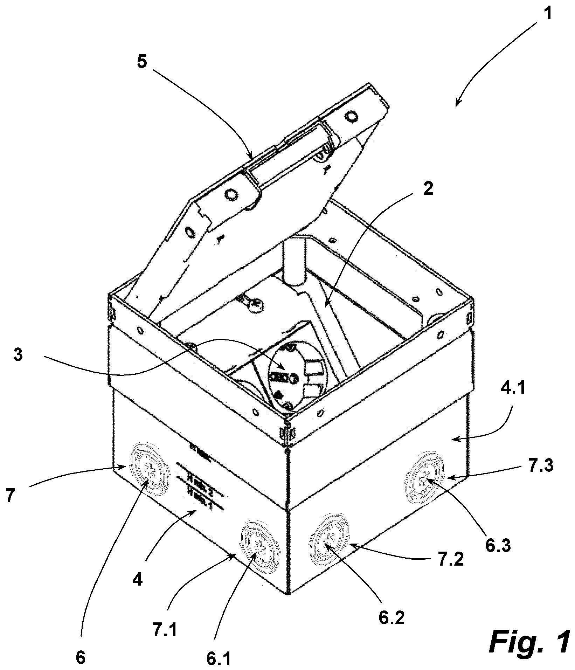

Figur 1 zeigt eine als Unterflurdose ausgebildete Installationsdose 1. Diese weist einen innenliegenden Installationsraum 2 auf, in dem eine elektrische Installation, hier in Form einer Mehrfachsteckdose 3, angeordnet ist. Der Installationsraum 2 wird durch Wände, von denen in der Figur 1 zwei Wände 4, 4.1 sichtbar sind, sowie einem Deckel 5 und einem in Figur 1 nicht sichtbaren Boden gebildet.

Die Installationsdose 1 weist in ihren Wänden 4, 4.1 durch Verschlussteile 6, 6.1, 6.2, 6.3 verschlossene Installationsöffnungen 7, 7.1, 7.2, 7.3 auf. Diese sind als Ausbrechöffnungen ausgebildet. Wird ein Verschlussteil 6, 6.1, 6.2, 6.3 oder ein Teil davon - nachstehend als Verschlusssegment angesprochen - herausgebrochen, wird die Installationsöffnung 7, 7.1, 7.2, 7.3 mit der gewünschten Querschnittsfläche freigegeben, sodass ein nicht näher dargestelltes Leerrohr oder Kabel als Langgut durch die Installationsöffnung 7, 7.1, 7.2, 7.3 in den Installationsraum 2 eingeführt werden kann. Die Wände 4, 4.1 sind bei dem dargestellten Ausführungsbeispiel aus einer Stahlblechplatine hergestellt.

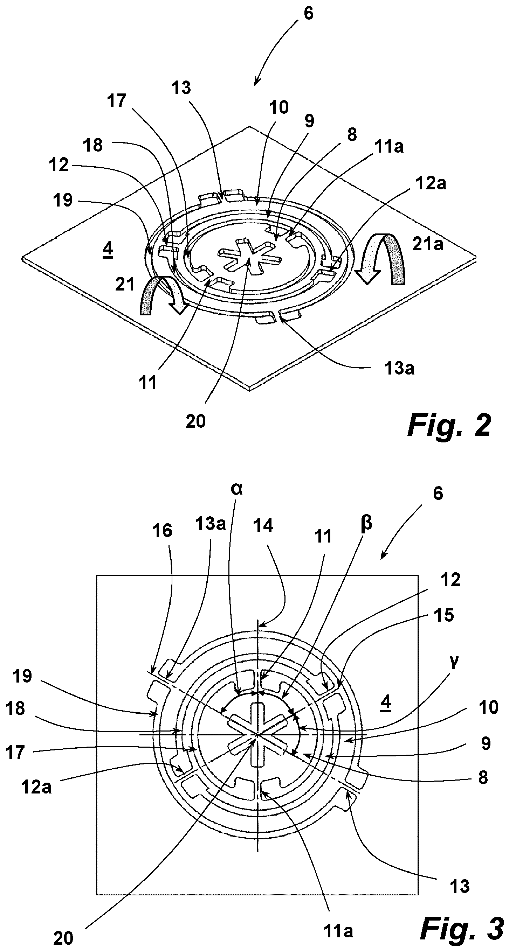

Die Figuren 2 und 3 zeigen einen Ausschnitt aus der Wand 4 mit dem Verschlussteil 6 der Installationsöffnung 7 in einer liegenden, perspektivischen Ansicht (Figur 2) sowie einer Draufsicht (Figur 3). Die nachstehenden Ausführungen gelten daher für beide Figuren.

Das dargestellte Verschlussteil 6 umfasst drei Verschlusssegmente 8, 9, 10. Diese sind konzentrisch zueinander angeordnet. Jedes Verschlusssegment 8, 9, 10 ist an seinem jeweilig äußeren Partner 9, 10, 4 - entweder an das nächstäußere Verschlusssegment 9, 10 oder die Wand 4 - über jeweils zwei Anbindungsstege 11, 11a, 12, 12a, 13, 13a angeschlossen. Die jeweils zu einem Verschlusssegment 8, 9, 10, jeweils diametral gegenüberliegenden Anbindungsstege 11, 11a, 12, 12a, 13, 13a bilden jeweils Schwenkachsen 14, 15, 16 (nur in Figur 3 dargestellt), um die die jeweiligen Verschlusssegmente 8, 9, 10 verschwenkt werden können.

Um ein Verschwenken der Verschlusssegmente 8, 9, 10 zu ermöglichen, ist zwischen dem Verschlusssegment 8, 9, 10 und dem jeweilig äußeren Partner 9, 10, 4 eine das jeweils innenliegende Verschlusssegment 8, 9, 10 einfassende Aussparung 17, 18, 19 vorgesehen. Diese weisen jeweils eine solche lichte Weite auf, dass ein Verschwenken der Verschlusssegmente 8, 9, 10 gegenüber ihrem jeweilig äußeren Partner 9, 10, 4 möglich ist, ohne dass das jeweilige Verschlusssegment 8, 9, 10 in dem jeweiligen äußeren Partner 9, 10, 4 verkantet.

Das innerste Verschlusssegment 8 weist eine Werkzeugaussparung 20 in seinem Mittelpunkt auf. Die Werkzeugaussparung 20 ist bereitgestellt durch drei sich kreuzende Schlitze, wobei die Längsachse jedes Schlitzes der Längserstreckung einer Schwenkachse 14, 15, 16 in ihrer Längserstreckung folgt. In jeden Schlitz kann die Klinge eines Schraubendrehers eingebracht werden. Eingesetzt wird ein Schraubendreher als Öffnungswerkzeug in denjenigen Schlitz, der mit derjenigen Schwenkachse 14, 15, 16 fluchtet, um die dasjenige Verschlusssegment 8, 9, 10 gedreht werden soll, welches aus der Installationsöffnung 7 herausgebrochen werden soll. Wird die Klinge des Schraubendrehers beispielsweise in den der Schwenkachse 14 zugehörigen Schlitz eingebracht, werden durch eine dann quer zur Längserstreckung dieses Schlitzes ausgeführte Schwenkbewegung 21 die Anbindungsstege 11, 11a tordiert. Die Anbindungsstege 11, 11a reagieren auf eine solche Torsionsbelastung jedoch nicht spontan durch einen spröden Bruch, sondern sind duktil ausgelegt, sodass ein gewisser Verschwenkwinkel möglich ist, ohne dass die Anbindungsstege 11, 11a brechen. Im vorliegenden Ausführungsbeispiel ist vorgesehen, dass das Verschlusssegment 8 um etwa 210° verschwenkt werden muss, bevor die Anbindungsstege 11, 11a duktil brechen. Dies bedeutet, dass das Verschlusssegment 8 zunächst um etwa 90° in die eine Richtung und anschließend um etwa 120° in die andere Richtung verschwenkt wird.

Soll zum Bereitstellen einer Installationsöffnung mit einem größeren Durchmesser das nächstäußere Verschlusssegment 9 herausgebrochen werden, wird das innerste Verschlusssegment 8 - ggf. unter Zuhilfenahme eines Schraubendrehers, dessen Klinge in den entsprechenden Schlitz eingebracht wird - um die Schwenkachse 15, die durch die Anbindungsstege 12, 12a, die das nächstäußere Verschlusssegment 9 mit seinem äußeren Partner, dem Verschlusssegment 10, verbinden, mit einer Schwenkbewegung 21a verschwenkt. Der Bruch der Anbindungsstege 12, 12a ist ausgelegt, wie dieses zuvor zu den Anbindungsstegen 11, 11a beschrieben ist.

Soll das äußerste Verschlusssegment 10 herausgetrennt werden, werden die Anbindungsstege 13, 13a, die das äußerste Verschlusssegment 10 mit seinem äußeren Partner - der Wand 4 - verbinden, um die diesbezügliche Schwenkachse 16 verschwenkt und damit die Anbindungsstege 13, 13a wie vorstehend beschrieben tordiert; auch diese Anbindungsstege brechen erst nach Tordieren derselben um einen bestimmten Winkelbetrag. Auch die Anbindungsstege 13, 13a sind ausgelegt, wie dieses vorstehend zu den Anbindungsstegen 11, 11a beschrieben ist. Daher gelten die vorstehenden Ausführungen auch für die Anbindungsstege 13, 13a.

In allen drei Fällen kann das innerste Verschlusssegment 8 als Ausgangspunkt für die Schwenkbewegung 21, 21a, insbesondere wenn mit einem Werkzeug ausgeführt, genutzt werden. Dies wird dadurch ermöglicht, dass die Schwenkachsen 14, 15, 16 mit einem Winkelabstand α, β, γ beabstandet sind. Im Vorliegenden sind die Winkel α, β, γ gleich groß; deshalb sind die Schwenkachsen 14, 15, 16 gleichwinklig ausgebildet.

Um die Anbindungsstege 11, 11a, 12, 12a, 13, 13a duktil auszugestalten, sind diese unter anderem mit einem Dicken-Breiten-Verhältnis von etwa 1 ausgestaltet, das heißt, dass sie genauso breit sind wie das Material der Blechplatine dick ist. Auf diese Weise ist der Querschnitt der Anbindungsstege 11, 11a, 12, 12a, 13, 13a im Wesentlichen quadratisch.

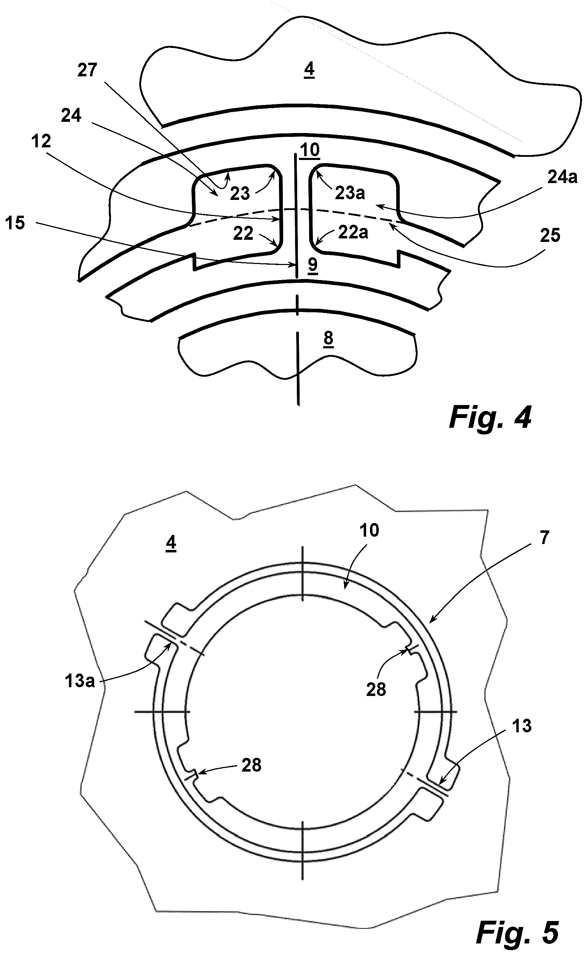

Eine vergrößerte Ansicht des Anbindungssteges 12 ist Figur 4, in der weitere Eigenschaften des Anbindungssteges 12 deutlich werden, die zu der gewünschten Duktilität führen. Dieselben Ausführungen gelten auch für die anderen Anbindungsstege. Der Anbindungssteg 12 verbindet das Verschlusssegment 9 mit seinem äußeren Partner, dem weiter außen liegenden Verschlusssegment 10. In seinem Übergang zwischen den beiden Verschlusssegmenten sind Radien 22, 22a, 23, 23a vorgesehen, um die Kerbwirkung bei einer Torsionsbeanspruchung im Übergang zu vermindern.

Zudem ist im Verschlusssegment 10 eine den Anbindungssteg 12 beidseitig umfassende Stegrestaussparung 24, 24a vorgesehen. Der in radialer Richtung nach innen weisende Abschluss 27 des Verschlusssegmentes 10 ist gegenüber dem in Figur 4 gestrichelt dargestellten Sollinnenquerschnitt 25 - der Spur der Verlängerung des übrigen, in radialer Richtung nach innen weisenden Abschlusses des Verschlusssegmentes 10 - in radialer Richtung nach außen versetzt. Die radiale Erstreckung der Stegrestaussparung 24, 24a ist so ausgelegt, dass der Mittelpunkt des Anbindungssteges 12 außerhalb des Sollinnenquerschnittes 25 liegt. Wird der Anbindungssteg 12 durch die Schwenkbewegung durchtrennt, ragt dieser nicht mehr in den Sollinnenquerschnitt 25 hinein; ein Behindern der Einführung eines Kabels oder eines Leerrohres durch den verbliebenen Stegrest 28 des Anbindungssteges 12 ist hierdurch unterbunden.

Gleichzeitig ist die Reststegaussparung 24, 24a so ausgebildet, dass in diesem Bereich - im Gegensatz zu dem sonstigen Bereich 26 der Aussparung 18 - genügend Raum für einen nicht näher dargestellten Kopf einer Trennzange ist, der beidseitig in den Bereich des Anbindungsstegs 12, respektive in die Stegrestaussparungen 24, 24a eingebracht werden kann, um, falls gewünscht, die Anbindungsstege 12 zu durchtrennen.

Die Geometrie des Verschlussteils 6, 6.1, 6.2, 6.3 ist in diesem Ausführungsbeispiel im Wesentlichen gestanzt. Lediglich im Bereich der Anbindungsstege 11, 11a, 12, 12a, 13, 13a, das heißt zur Ausbildung der Kontur der Stegrestaussparungen 24, 24a ist diese lasergeschnitten, um die erforderliche Prozessgenauigkeit sicherzustellen.

Figur 5 zeigt die Installationsöffnung 7 mit den herausgetrennten Verschlussteilen 8, 9. Dadurch ist eine Installationsöffnung bereitgestellt, die durch die Geometrie des nach innen weisenden Abschlusses des Verschlusssegmentes 10 bereitgestellt ist. Erkennbar ist darin, dass die Stegreste 28 außerhalb der Spur der Mantelfläche der Innenseite des Verschlusssegmentes 10 - dem Sollinnenquerschnitt 25 - liegt.

Die Erfindung ist anhand eines Ausführungsbeispiels erläutert. Ohne den Schutzbereich, beschrieben durch die Ansprüche, zu verlassen, ergeben sich für den Fachmann zahlreiche weitere Möglichkeiten, den Erfindungsgedanken umzusetzen, ohne dass diese im Rahmen dieser Ausführungen erläutert werden müssten.

### Bezugszeichenliste

- 1: Installationsdose
- 2: Installationsraum
- 3: Mehrfachsteckdose
- 4,4.1: Wände
- 5: Deckel
- 6, 6.1, 6.2, 6.3: Verschlussteil
- 7, 7.1, 7.2, 7.3: Installationsöffnung
- 8: Verschlusssegment
- 9: Verschlusssegment
- 10: Verschlusssegment
- 11, 11a: Anbindungssteg
- 12, 12a: Anbindungssteg
- 13, 13a: Anbindungssteg
- 14, 15, 16: Schwenkachse
- 17, 18, 19: Aussparung
- 20: Werkzeugaussparung
- 21, 21a: Schwenkbewegung
- 22, 22a, 23, 23a: Radius
- 24, 24a: Stegrestaussparung
- 25: Sollinnenquerschnitt
- 26: sonstiger Bereich
- 27: Abschluss
- 28: Stegrest

- α, β, γ: Winkel zwischen Schwenkachsen

## Patentansprüche

1. Installationsdose (1) mit zumindest einer Installationsöffnung (7, 7.1, 7.2, 7.3) zum Einführen eines Leerrohres oder Kabels, wobei die Installationsöffnung (7, 7.1, 7.2, 7.3) im Auslieferungszustand durch mehrere, ineinander angeordnete Verschlusssegmente (8, 9, 10) verschlossen ist, wobei zumindest zwei Verschlusssegmente (8, 9, 10) an ihrem jeweiligen äußeren Partner (9, 10, 4) mittels zwei, jeweils eine Schwenkachse (14, 15, 16) bildenden Anbindungsstegen (11, 11a, 12, 12a, 13, 13a) angeschlossen sind und die durch die Anbindungsstege (11, 11a, 12, 12a, 13, 13a) gebildeten Schwenkachsen (14, 15, 16) zwischen verschiedenen Partnern in Umfangsrichtung der Installationsöffnung (7, 7.1, 7.2, 7.3) winklig zueinander angeordnet sind, wobei zwischen jedem Verschlusssegment (8, 9, 10) und seinem jeweils äußeren Partner (9, 10, 4) eine umlaufende, von den Anbindungsstegen (11, 11a, 12, 12a, 13, 13a) unterbrochene Aussparung (17, 18, 19) vorgesehen ist und wobei die Anbindungsstege (11, 11a, 12, 12a, 13, 13a) gegenüber einer Torsionsbewegung duktil ausgelegt sind, damit jedes Verschlusssegment (8, 9, 10) gegenüber seinem äußeren Partner (9, 10, 4) um die Anbindungsstege (11, 11a, 12, 12a, 13, 13a) verschwenkbar und zum Öffnen einer Installationsöffnung (7, 7.1, 7.2, 7.3) die Anbindungsstege (11, 11a, 12, 12a, 13, 13a) eines Verschlusssegments (8, 9, 10) in Folge einer eine Torsion auf die Anbindungsstege (11, 11a, 12, 12a, 13, 13a) ausübenden Schwenkbewegung (21, 21a) durchtrennbar sind.

2. Installationsdose nach Anspruch 1, **dadurch gekennzeichnet, dass** das innerste Verschlusssegment (8) eine Werkzeugaussparung (20) und/oder eine von diesem abragende Handhabe aufweist, mit der die Schwenkbewegung (21, 21a) um eine der Schwenkachsen (14, 15, 16) einkoppelbar ist.

3. Installationsdose (1) mit zumindest einer Installationsöffnung (7, 7.1, 7.2, 7.3) zum Einführen eines Leerrohres oder Kabels, wobei die Installationsöffnung (7, 7.1, 7.2, 7.3) im Auslieferungszustand durch zumindest ein Verschlusssegment (8, 9, 10) verschlossen ist, wobei das zumindest eine Verschlusssegment (8, 9, 10) an seinem jeweiligen äußeren Partner (9, 10, 4) mittels zwei, eine Schwenkachse (14, 15, 16) bildenden Anbindungsstegen (11, 11a, 12, 12a, 13, 13a) angeschlossen ist, wobei zwischen dem zumindest einen Verschlusssegment (8, 9, 10) und seinem äußeren Partner (9, 10, 4) eine umlaufende, von den Anbindungsstegen (11, 11a, 12, 12a, 13, 13a) unterbrochene Aussparung (17, 18, 19) vorgesehen ist, wobei die Anbindungsstege (11, 11a, 12, 12a, 13, 13a) gegenüber einer Torsionsbewegung duktil ausgelegt sind, damit das Verschlusssegment (8, 9, 10) gegenüber seinem äußeren Partner (9, 10, 4) um die Anbindungsstege (11, 11a, 12, 12a, 13, 13a) verschwenkbar ist und zum Öffnen einer Installationsöffnung (7, 7.1, 7.2, 7.3) die Anbindungsstege (11, 11a, 12, 12a, 13, 13a) des zumindest einen Verschlusssegments (8, 9, 10) in Folge einer eine Torsion auf die Anbindungsstege (11, 11a, 12, 12a, 13, 13a) ausübenden Schwenkbewegung (21) durchtrennbar sind und wobei das Verschlusssegment (8) eine Werkzeugaussparung (20) und/oder eine davon abragende Handhabe aufweist, mit der eine Schwenkbewegung (21) um die zumindest eine Schwenkachse (14, 15, 16) einkoppelbar ist.

4. Installationsdose nach einem der Ansprüche 2 oder 3, **dadurch gekennzeichnet, dass** die Werkzeugaussparung (20) in Form von Schlitzen zum Einsetzen einer Klinge eines Schraubendrehers ausgebildet ist, wobei die Längserstreckung der Schlitze mit den durch die Anbindungsstege (11, 11a, 12, 12a, 13, 13a) gebildeten Schwenkachsen (14, 15, 16) zumindest weitgehend fluchtet.

5. Installationsdose nach einem der Ansprüche 1 bis 4, **dadurch gekennzeichnet, dass** die Anbindungsstege (11, 11a, 12, 12a, 13, 13a) ein Dicken-Breitenverhältnis zwischen 0,5 und 2 aufweisen.

6. Installationsdose nach einem der Ansprüche 1 bis 5, **dadurch gekennzeichnet, dass** durch das Heraustrennen eines oder mehrerer Verschlusssegmente (8, 9, 10) eine kreisrunde Installationsöffnung (7, 7.1, 7.2, 7.3) bereitstellbar ist.

7. Installationsdose nach einem der Ansprüche 1 bis 6, **dadurch gekennzeichnet, dass** das zumindest eine Verschlusssegment (8, 9, 10) konzentrisch gegenüber seinem äußeren Partner (9, 10, 4) angeordnet ist.

8. Installationsdose nach einem der Ansprüche 1 bis 7 mit Ausnahme des Anspruchs 3, **dadurch gekennzeichnet, dass** die Winkelabstände (α, β, γ) zwischen den durch die Anbindungsstege (11, 11a, 12, 12a, 13, 13a) gebildeten Schwenkachsen (14, 15, 16) im Wesentlichen gleich sind.

9. Installationsdose nach einem der Ansprüche 1 bis 8, **dadurch gekennzeichnet, dass** im Bereich der Anbindungsstege (11, 11a, 12, 12a, 13, 13a) die lichte Weite der Aussparung (17, 18, 19) vergrößert gegenüber dem sonstigen Bereich (26) ist, sodass der Kopf einer Trennzange zum Durchtrennen der Anbindungsstege (11, 11a, 12, 12a, 13, 13a) in den vergrößerten Abschnitt der Aussparung (17, 18, 19) hineinführbar ist.

10. Installationsdose nach einem der Ansprüche 1 bis 9, **dadurch gekennzeichnet, dass** der in radialer Richtung nach innen weisende Abschluss einer solchen, benachbart zu den Anbindungsstegen (12, 12a, 13, 13a) befindlichen Vergrößerung einer Aussparung (17, 18, 19) des zumindest einen äußeren Partners (9, 10, 4) benachbart zu den Anbindungsstegen (12, 12a, 13, 13a) gegenüber der Spur der Mantelfläche als Sollinnenquerschnitt (25) der Aussparung (17, 19) soweit in radialer Richtung nach außen hin gegenüber dem nach innen weisenden Abschluss der umlaufenden Aussparung (18, 19) versetzt ist, damit ein am äußeren Partner (9, 10, 4) verbliebener Anbindungsstegrest (28) außerhalb der den Sollinnenquerschnitt (25) bildenden Spur der Mantelfläche der Aussparung (18, 19) und innerhalb der benachbart zu den Anbindungsstegen (12, 12a, 13, 13a) befindlichen Vergrößerung angeordnet ist.

11. Installationsdose (1) mit zumindest einer Installationsöffnung (7, 7.1, 7.2, 7.3) zum Einführen eines Leerrohres oder Kabels, wobei die Installationsöffnung (7, 7.1, 7.2, 7.3) im Auslieferungszustand durch zumindest ein Verschlusssegment (8, 9, 10) verschlossen ist, wobei das zumindest eine Verschlusssegment (8, 9, 10) an seinem jeweiligen äußeren Partner (9, 10, 4) mittels zwei, eine Schwenkachse (14, 15, 16) bildenden Anbindungsstegen (11, 11a, 12, 12a, 13, 13a) angeschlossen ist, wobei zwischen dem zumindest einen Verschlusssegment (8, 9, 10) und seinem äußeren Partner (9, 10, 4) eine umlaufende, von den Anbindungsstegen (11, 11a, 12, 12a, 13, 13a) unterbrochene Aussparung (17, 18, 19) vorgesehen ist und dass die Anbindungsstege (11, 11a, 12, 12a, 13, 13a) gegenüber einer Torsionsbewegung duktil ausgelegt sind, damit das Verschlusssegment (8, 9, 10) gegenüber dem äußeren Partner (9, 10, 4) um seine Anbindungsstege (11, 11a, 12, 12a, 13, 13a) verschwenkbar ist und zum Öffnen der Installationsöffnung (7, 7.1, 7.2, 7.3) die Anbindungsstege (11, 11a, 12, 12a, 13, 13a) eines Verschlusssegments (8, 9, 10) in Folge einer eine Torsion auf die Anbindungsstege (11, 11a, 12, 12a, 13, 13a) ausübenden Schwenkbewegung (21, 21a) durchtrennbar sind, der äußere Partner (9, 10, 4) zu seinem innenliegenden Verschlusssegment (8, 9, 10) in radialer Richtung einen nach innen weisenden Abschluss mit einer in radialer Richtung nach außen ausgeführten Aussparung aufweist, damit ein am äußeren Partner (10, 4) verbliebener Anbindungsstegrest (28) außerhalb der den Sollinnenquerschnitt (25) bildenden Spur der Mantelfläche angeordnet ist.

12. Installationsdose nach einem der Ansprüche 10 oder 11, **dadurch gekennzeichnet, dass** die Anbindungsstege (12, 12a, 13, 13a) dergestalt ausgelegt sind, dass diese in Anbindungssteglängserstreckung durch eine Schwenkbewegung (21a) an einer Stelle brechen, damit bei herausgebrochenem Verschlusssegment (9, 10) die Stegereste nicht über den Sollinnenquerschnitt (25) hinausragen.

13. Installationsdose nach einem der Ansprüche 1 bis 12, **dadurch gekennzeichnet, dass** der Übergang zwischen Anbindungssteg (11, 11a, 12, 12a, 13, 13a) und dem daran angeschlossenen Verschlusssegment (8, 9, 10) bzw. äußeren Partner (9, 10, 4) in der Ebene der Installationsöffnung (7, 7.1, 7.2, 7.3) mit einem Radius (22, 22a, 23, 23a) ausgeführt ist.

14. Installationsdose nach einem der Ansprüche 1 bis 13, **dadurch gekennzeichnet, dass** die Installationsdose (1) zumindest in dem Bereich der zumindest einen Installationsöffnung (7, 7.1, 7.2, 7.3) aus einer Blechplatine hergestellt ist.

15. Installationsdose nach einem der Ansprüche 1 bis 14, **dadurch gekennzeichnet, dass** die Installationsdose (1) zum Ausbilden in dem Bereich der Installationsöffnung (7, 7.1, 7.2, 7.3) mit seinen Verschlussteilen (6, 6.1, 6.2, 6.3) gestanzt ist und/oder dass die Installationsdose (1) in dem Bereich der Installationsöffnung (7, 7.1, 7.2, 7.3) zum Ausbilden der Anbindungsstege (11, 11a, 12, 12a, 13, 13a) der Verschlussteile (6, 6.1, 6.2, 6.3) lasergeschnitten ist.
